# EUROPEAN PATENT APPLICATION

(11) **EP 2 870 863 A1**
(43) Date of publication of application: **13.05.2015**
(21) Application number: 13852699.1
(22) Date of filing: 22.10.2013
(51) Int. Cl.: A01G 31/00

(54) **PLANT HOLDER AND TRANSPLANTATION DEVICE**

(30) Priority: 12.11.2012 JP 2012248447
(71) Applicant: Tsubakimoto Chain Co., Osaka 530-0005 (JP)
(72) Inventor: HIRAI, Tatsuya, Osaka-shi Osaka 530-0005 (JP); KOUNO, Kouji, Osaka-shi Osaka 530-0005 (JP); OKAZAKI, Yu, Osaka-shi Osaka 530-0005 (JP); OHARA, Hitoshi, Osaka-shi Osaka 530-0005 (JP)
(74) Representative: Von Kreisler Selting Werner - Partnerschaft von Patentanwälten und Rechtsanwälten mbB
(86) International application number: PCT/JP2013/078593
(87) International publication number: WO 2014/073369

(57) **Abstract**

A plant holder having a simple configuration, whereby the root of a plant can be made to pass through to below a holding hole without damaging, leaves are prevented from hanging down and becoming damaged, and the workability in the case of automation can be improved. The plant holder 110 which fits into the holding hole 121 of a cultivation panel 120 and has a supporting hole 114 supporting a plant 101 includes: a fitting part 111, an outer peripheral part of which fits into the holding hole 121 of the cultivation panel 120; a flange part 112 provided in an uppermost part; and an engaging part 113 which is provided between the flange part 112 and the engaging part 111; wherein the external diameter of the engaging part 113 is formed to be smaller than the external diameter of the fitting part 111 and the flange part 112.

## Description

### TECHNICAL FIELD

The present invention relates to a plant holder, at least a portion of an outer peripheral part of which fits into a holding hole of a cultivation panel, and which has a supporting hole that directly or indirectly supports a plant, and to a transplantation device which holds and moves the plant holder, and relates, more particularly, to a plant holder and a transplantation device which are suitable for moving a plant to a holding hole of a different cultivation panel, in accordance with growth of the plant, in hydroponic cultivation equipment in a plant factory, or the like.

### BACKGROUND ART

Conventionally, in a plant factory, or the like, hydroponic cultivation equipment is commonly known, in which a plant is held in a holding member, for example, a cultivation panel having a plurality of holding holes, and the roots of a plant which extend below the holding hole of the cultivation panel are immersed in a cultivation solution, or the like, or alternatively, a cultivation solution, or the like, is dispersed towards the roots.

In hydroponic cultivation equipment of this kind, for example, when a plant which spreads broadly in the horizontal direction as it grows is held and cultivated in a holding panel, the space efficiency is low if a single cultivation panel is used which has holding holes arranged at intervals designed to take account of the growth of the plant, and overall production efficiency deteriorates.

Therefore, plants are transplanted to a cultivation panel having a different interval between holding holes, in accordance with the growth of the plants, and it is desirable in terms of space efficiency to carry out this transplantation task frequently as the plant grows, and cultivation equipment which is automated by a transplantation device in order to carry out this transplantation task smoothly and efficiently has been proposed (see, for example, Patent Document 1, etc.)

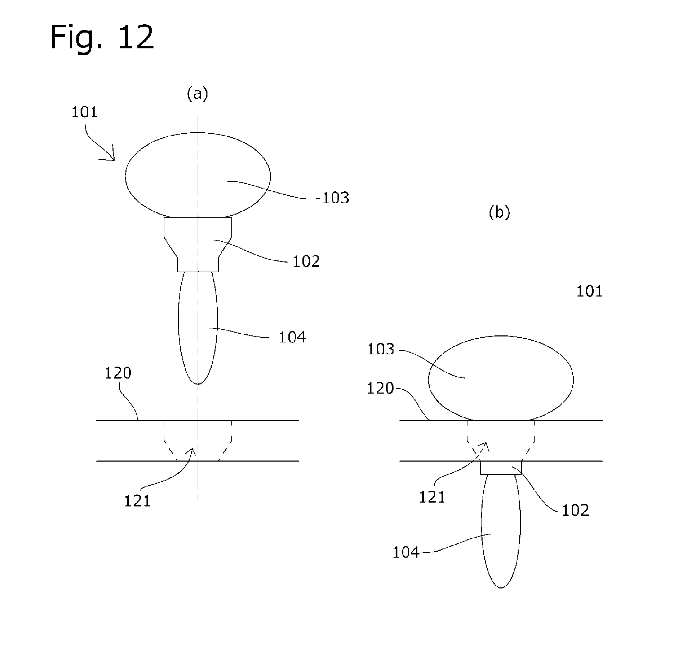

Conventionally, in automated cultivation equipment, as shown in Figs. 12A and 12B, a plant 101 is supported in such a manner that the leaves 103 grow upwards from a supporting body 102, and the root 104 grows downwards from same, and the supporting body 102 is inserted directly into a holding hole 121 of a cultivation panel 120 and is supported thereby.

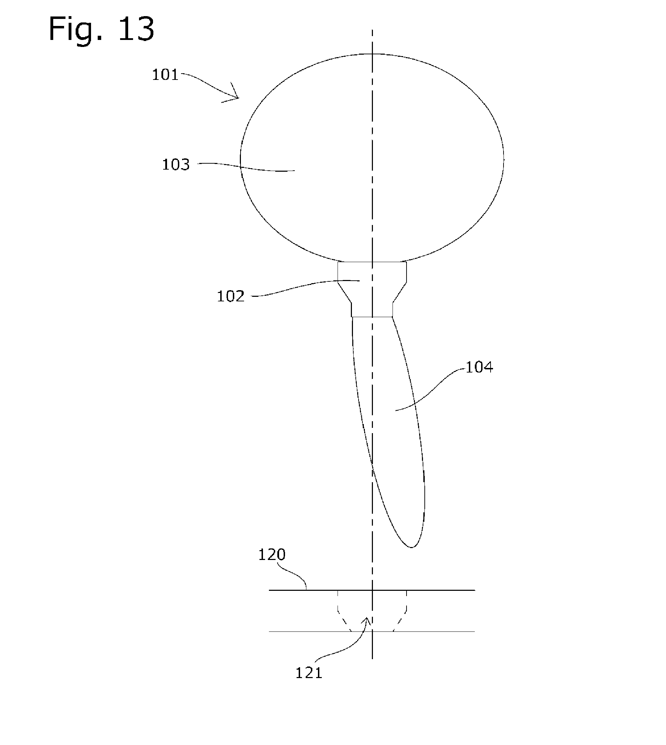

As the plant 101 grows, the plant 101 is transplanted to another cultivation panel 120 having a different interval between holding holes 121, but when the plant is moved in a horizontal direction during growth and transplantation tasks, the root 104 may spread further than the holding hole 121, and may not be directed perpendicularly downwards, and as shown in Fig. 13, if the supporting body 102 is lowered from directly above the cultivation panel 120 that is the transplantation destination, there is a problem in that the root 104 cannot enter correctly into the holding hole 121.

Therefore, there is a commonly known transplantation device in which an accurate transplantation task is carried out smoothly, by using suction means to suction the root of the plant from below the holding hole of the cultivation panel and causing the root to pass through the holding hole, so as to cause the root of the plant to extend reliably below the holding hole in order to avoid a situation where all or a portion of the root of the plant fails to project below the holding hole (see, for example, Patent Document 2, etc.).

Furthermore, there is commonly known technology having a structure in which a plant held on a supporting body via a plant holder having a flange on the upper part thereof is held in a holding hole of a cultivation panel, and the holding properties of the plant on the cultivation panel are improved while making the holding holes larger than the supporting body (see, for example, Patent Document 3, etc.).

### Citation List

### Patent Literature

Patent Document 1: Japanese Patent Application Publication No. 7-147857
Patent Document 2: Japanese Patent Application Publication No. 2000-166408
Patent Document 3: Japanese Patent Application Publication No. H8-308408

### DISCLOSURE OF THE INVENTION

### Problems to be Solved by the Invention

As described above, in conventional cultivation equipment, when transplanting a plant to a holding hole of a cultivation panel, there is a risk that all or a portion of the root will not enter into the holding hole, or will become stuck in the holding hole, and hence that the plant cannot be transplanted to the holding hole, or that all or a portion of the root will not project below the holding hole, even if the plant can be transplanted.

The extent of this occurrence is diminished by using suction means which suctions the root of the plant to cause the root to pass through the holding hole, as in Patent Document 2, but the equipment required for this is complicated, and furthermore, if the root being introduced into the holding hole has a large bulk or spread, then when pressed against the inner surface of the holding hole, there is a risk that all or a portion of the root may become stuck due to resistance with the inner surface of the suction hole, and that it may not be possible to make the root assume a state extending below the holding hole, and furthermore, if the suctioning force is increased, then there is, conversely, a risk of causing damage to the roots by this suctioning force.

As in Patent Document 3, even with a structure in which the holding holes are made to a large size, although the occurrence of cases where all or a portion of the root fails to project below the holding hole can be diminished, the holding holes necessarily have to be of smaller diameter than the flange, and therefore such cases cannot be prevented altogether.

Furthermore, in conventional cultivation equipment, if the leaves of the plant spread horizontally, the leaves may hang down and touch the transplantation device, or may touch the cultivation panel or cultivation solution, and the like, after transplantation, and the leaves may be damaged, become discolored, transformed, or withered, thus reducing the product value.

The occurrence of this can be prevented to some extent if a plant held on a supporting body via a plant holder having a flange on the upper part thereof is supported in a holding hole of a cultivation panel, as in Patent Document 3, but there are problems in that it is necessary to change the handling means of the plant holder in accordance with the size of the flange, and furthermore, it is difficult to make the flange large enough to adequately prevent damage to the leaves, due to handling restrictions, and the like.

Moreover, in commonly known technologies such as those indicated in Patent Document 2 and Patent Document 3, the supporting body fits tightly so as to be reliably supported in the holding hole of the cultivation panel, and difficult handling is involved in order to pull the supporting body out from the cultivation panel during transplantation, and a complicated mechanism is required in the automated transplantation device.

The present invention was devised in order to resolve these problems, an object thereof being to provide a plant holder, a cultivation panel and a transplantation device having a simple configuration, whereby the root of a plant can be made to pass through to below a holding hole, without being damaged, leaves are prevented from hanging down and becoming damaged, and the workability in the case of automation can be improved.

### Means for Solving the Problems

The plant holder relating to the present invention resolves the abovementioned problems by a plant holder, at least a portion of an outer peripheral part of which fits into a holding hole of a cultivation panel, and which has a supporting hole directly or indirectly supporting a plant, wherein the plant holder is formed of a fitting part, an outer periphery of which fits into the holding hole in the cultivation panel, a flange part which is provided in an uppermost part, and an engaging part which is provided between the flange part and the fitting part; and the external diameter of the engaging part is formed to be smaller than the external diameter of the fitting part and the flange part.

The cultivation panel relating to the present invention resolves the abovementioned problems by a cultivation panel in which a plurality of holding holes passing vertically are provided, wherein the holding holes are formed such that the plant holder relating to the present invention can be fitted therein.

The transplantation device relating to the present invention resolves the abovementioned problems by a transplantation device having a holding part holding the plant holder relating to the present invention, wherein two holding arms extending forward are provided in the holding part; and the interval between the two holding arms is formed to be larger than the diameter of the engaging part and smaller than the diameter of the flange part.

### Beneficial Effects of the Invention

According to the plant holder relating to claim 1, since the diameter of the fitting part can be made large, and the diameter of the holding hole of the cultivation panel can be made large, then it is possible to make the root of a plant pass through to below the holding hole and assume a downward extended state, without being damaged, and therefore it is possible to transplant a plant easily without adding complicated equipment, in an automated cultivation facility.

Furthermore, by having an engaging part which is formed to be smaller than the external diameter of the fitting part and the flange part, it is possible to use the engaging part to handle the plant holder when transplantation is automated, and the working efficiency in the case of automation can be improved.

Moreover, since the flange part does not obstruct handling, then it is possible to adopt a suitable diameter for the flange part, and the leaves can be prevented reliably from hanging down and touching the transplantation device, or touching the cultivation panel and/or the cultivation solution, or the like, after transplantation, and becoming damaged.

According to the configuration described in claim 2, since the plant holder which has been fitted into the holding hole of the cultivation panel can be separated by being raised upwards, and the plant holder can be fitted by being lowered from above the holding hole of the cultivation panel, the handling operation is simplified, and working efficiency in the case of automation is improved.

According to the configuration described in claim 3, by forming at least a portion of the outer circumferential surface of the fitting part with a taper shape which decreases in diameter towards the bottom, then when the plant holder is lowered from above the holding hole of the cultivation panel, the plant holder is fitted automatically in an accurate position following the taper shape, and therefore accurate positioning work is not required and workability is further improved.

Furthermore, since the holding hole of the cultivation panel has a taper shape corresponding to the taper shape of the outer circumferential surface of the fitting part, then the plant holder can be fitted reliably into the holding hole of the cultivation panel, and furthermore, even if the root touches the holding hole of the cultivation panel during introduction, the root can be made to pass readily through to below the holding hole, following the taper shape.

According to the configuration described in claim 4, the supporting body which has been fitted into the supporting hole can be separated by being raised upwards and the supporting body can be fitted by being lowered from above the supporting hole, and therefore it becomes easy to introduce and hold a plant supported on the supporting body, and the workability during automation can be further improved.

According to the configuration described in claim 5, by forming at least a portion of the inner surface of the holding hole with a taper shape which decreases in diameter towards the bottom, then when the plant supported by the supporting body is lowered from above the holding hole, the plant is fitted automatically in an accurate position following the taper shape, and therefore accurate positioning work is not required and workability is further improved.

Furthermore, since the supporting body is provided with a taper shape corresponding to the taper shape of the inner surface of the supporting hole, then it is possible to fit the supporting body reliably into the supporting hole, and furthermore, even of the root touches the supporting hole during introduction, the root can readily be made to pass through to below the supporting hole following the taper shape.

According to the configuration described in claim 6, by preparing fitting parts, engaging parts and flange parts having respectively different sizes and shapes, independently, it is possible to adopt an optimum combination thereof in accordance with the plant being cultivated, the transplantation device and the cultivation panel, and therefore general utility is improved, rather than having to prepare plant holders of many different types.

According to the configuration described in claim 7, by forming a water collecting section to the outside of the supporting hole on the flange side, then when the root of the plant is suctioned from below while the plant is introduced into the supporting hole, as in Patent Document 2 described above, by supplying water to the water collecting section, it is possible to suction the root efficiently together with the water, and the root is not hurt during introduction.

According to the configuration described in claim 8, since the water collecting section is set to an arbitrary broad range without changing the shape of the supporting hole, due to being formed by the inner circumference side space of a wall part erected on the upper surface of the flange to the outside of the supporting hole, then it is possible to freely provide a water collecting section of a shape which corresponds to the spreading of the root of the plant and the direction of movement during transplantation.

According to the cultivation panel relating to claim 9, it is possible to improve the working efficiency in the case of automation, by enabling fitting therein of a plant holder described in any one of claims 1 to 8.

According to the transplantation device relating to claim 10, by inserting the two holding arms from the sides so as to sandwich the engaging part of the plant holder, and moving the holding arms upwards, the two holding arms can support the flange part from below and raise the whole plant holder upwards, and therefore even if the transplantation work is automated, the operation is simplified, a complicated mechanism is not required, and the workability can be improved.

According to the configuration described in claim 11, by providing an abutting part formed in a shape following the outer surface shape of the engaging part of the plant holder, between the two holding arms of the holding part, the abutting part is able to support the flange part from below, in addition to the two holding arms, and can raise the whole plant holder upwards, and therefore the plant holder can be held and moved more reliably.

According to the configuration described in claim 12, when the two holding arms support the flange part from below and raise the whole plant holder upwards, then even if the plant holder is moved over the two holding arms, the outer periphery of the flange part is restricted by the projecting parts which project upwards, and the plant holder is prevented from falling off from the two holding arms.

According to the configuration described in claim 13, when the two holding arms support the flange part from below and raise the whole plant holder upwards, due to engagement between the engaging protrusion or the engaging recess with the engaging protrusion or engaging recess formed in the flange part, the plant holder does not move over the two holding arms and is prevented from falling off from the two holding arms.

### BRIEF DESCRIPTION OF THE DRAWINGS

Fig. 1 is an illustrative diagram before supporting a plant holder and plant relating to one embodiment of the present invention;
Fig. 2 is an illustrative diagram of a plant holder relating to one embodiment of the present invention in which a plant is supported;
Fig. 3 is an illustrative diagram before fitting a plant holder and a cultivation panel relating to one embodiment of the present invention;
Fig. 4 is an illustrative diagram of a plant holder relating to one embodiment of the present invention which has been fitted to a cultivation panel;
Fig. 5 is an illustrative diagram of a plant holder relating to a further embodiment of the present invention;
Fig. 6 is a planar illustrative diagram of a transplantation device relating to an embodiment of the present invention;
Fig. 7 is a side face illustrative diagram of a transplantation device relating to an embodiment of the present invention;
Fig. 8 is a side face illustrative diagram of a transplantation device relating to an embodiment of the present invention, when engaged with a plant holder;
Fig. 9 is a planar illustrative diagram of a transplantation device relating to a further embodiment of the present invention;
Fig. 10 is a side face illustrative diagram of a transplantation device relating to a further embodiment of the present invention;
Fig. 11 is a side face illustrative diagram of a transplantation device relating to a further embodiment of the present invention, when engaged with a plant holder;
Fig. 12 is an illustrative diagram of a conventional cultivation panel and a plant in a state (a) before holding and (b) when held; and
Fig. 13 is an illustrative diagram of a conventional cultivation panel and a grown plant before being held.

### EXPLANATION OF REFERENCE NUMERALS

- 101: plant
- 102: supporting body
- 103: leaves
- 104: root
- 110: plant holder
- 111: fitting part
- 112: flange part
- 113: engaging part
- 114: supporting hole
- 115: taper section (of inner surface of supporting hole)
- 116: water collecting section
- 117: taper section (of outer circumferential surface of engaging part)
- 118: wall part
- 119: engaging protrusion (of flange part)
- 120: cultivation panel
- 121: holding hole
- 122: taper section (of holding hole)
- 130: holding part
- 131: holding arm
- 132: abutting part
- 133: projecting part
- 134: engaging protrusion

### BEST MODE FOR CARRYING OUT THE INVENTION

The plant holder according to the present invention is a plant holder of which at least a portion of an outer peripheral part fits into a holding hole of a cultivation panel, the plant holder also having a supporting hole which directly or indirectly supports a plant; wherein the plant holder comprises a fitting part of which an outer periphery fits into the holding hole in the cultivation panel, a flange part which is provided in an uppermost part, and an engaging part which is provided between the flange part and the fitting part; and the external diameter of the engaging part is formed to be smaller than the external diameter of the fitting part and the flange part; and may have any specific configuration provided that, by means of a simple configuration, the root of a plant can be made to pass through to below a holding hole, without being damaged, leaves are prevented from hanging down and becoming damaged, and the workability in the case of automation can be improved.

The material of the plant holder may be, for example, any resin, or metal, or other material, which has excellent water-proofing, corrosion resistance, durability, or the like.

The cultivation panel according to the present invention is a cultivation panel in which a plurality of holding holes passing in a vertical direction are provided, and the panel may have any specific configuration, provided that the holding holes are formed in such a manner that the plant holder described in any one of claims 1 to 8 can be fitted therein.

Similarly to the plant holder of the present invention, the material of the cultivation panel may be any resin, or metal, or other material, which has excellent water-proofing, corrosion resistance, and durability.

The transplantation device according to the present invention is a transplantation device having a holding part which holds a plant holder as described in any one of claims 1 to 8, and provided that two holding arms extending towards the front are provided in the holding part, and that the interval between the two holding arms is formed to be larger than the diameter of the engaging part and smaller than the diameter of the flange part, the transplantation device may have any specific configuration.

Similarly to the plant holder of the present invention, the material of the holding arms may be any resin, or metal, or other material, which has excellent water-proofing, corrosion resistance, and durability.

Furthermore, the drive mechanism, control device, and the like, for moving the holding arms in order to carry out transplantation work may have any configuration, and may include a mechanism which holds and moves the cultivation panel, and the like, and/or may include suction means as described in Patent Document 2 discussed above.

### Practical Examples

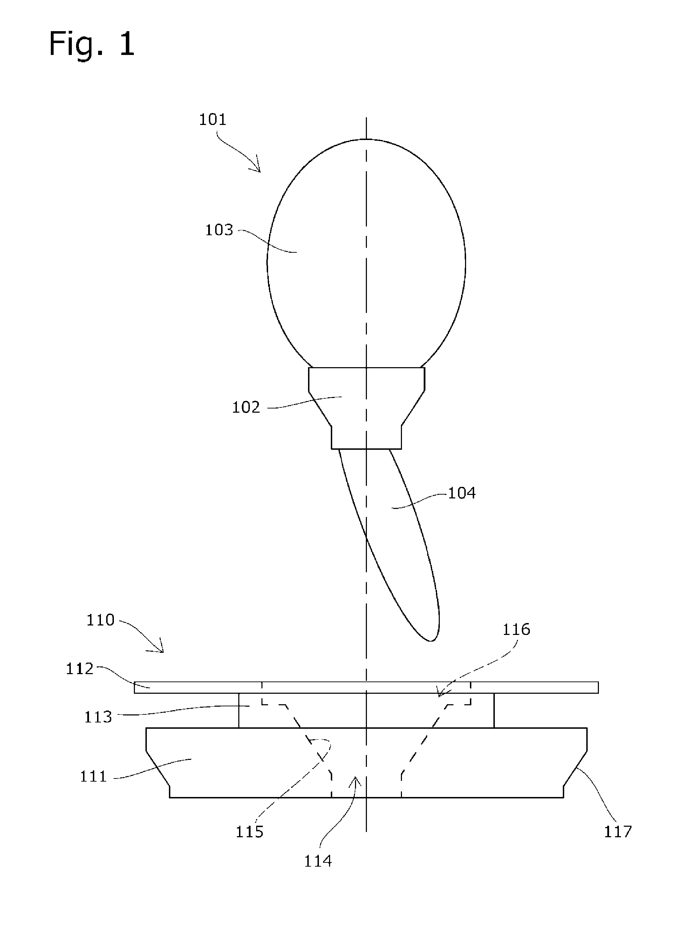

One embodiment of the plant holder and cultivation panel of the present invention is described here with reference to Fig. 1 to Fig. 4.

As illustrated in Fig. 1, etc., the plant holder 110, which is one embodiment of the present invention is formed, from the top down, by a flange part 112, an engaging part 113 and a fitting part 111.

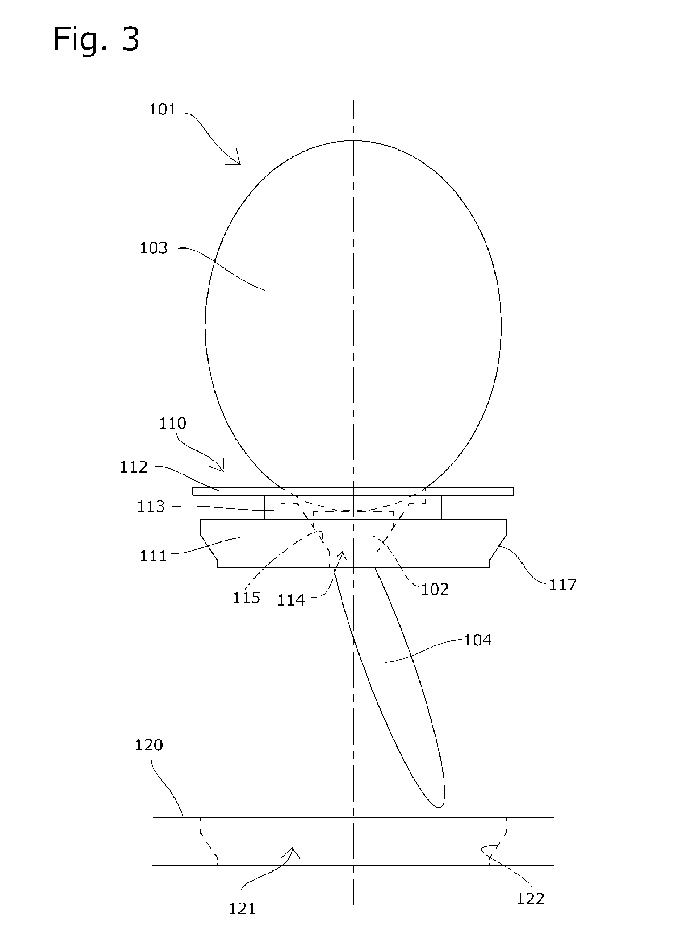

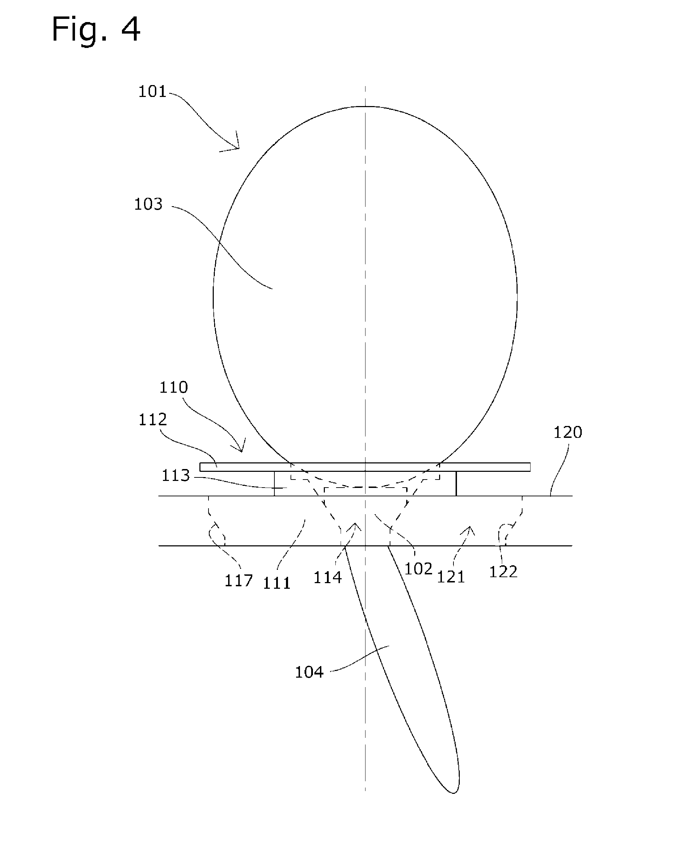

As illustrated in Fig. 3 and Fig. 4, the outer peripheral part of the fitting part 111 is formed to a shape whereby the fitting part 111 can be inserted from above into a holding hole 121 of the cultivation panel 120 and is held without passing below the holding hole 121.

In the present embodiment, a taper section 122 which decreases in diameter towards the bottom is formed in the holding hole 121 of the cultivation panel 120, and a taper section 117 which decreases in diameter towards the bottom and which fits with the taper section 122 is formed in the outer peripheral part of the fitting part 111.

The external diameter of the engaging part 113 is formed to be smaller than the external diameter of the fitting part 111 and the flange part 112.

The plant holder 110 has a supporting hole 114 having a shape which enables a plant 101 supported on a supporting body 102 to be introduced therein from above, and which holds the supporting body 102 without allowing same to pass below.

In the present embodiment, a taper section 115 which decreases in diameter towards the bottom is provided on the inner surface of the supporting hole 114, and is formed to have a large diameter so as to create a water collecting section 116 up to a prescribed depth from the flange-side top end of the supporting hole 114.

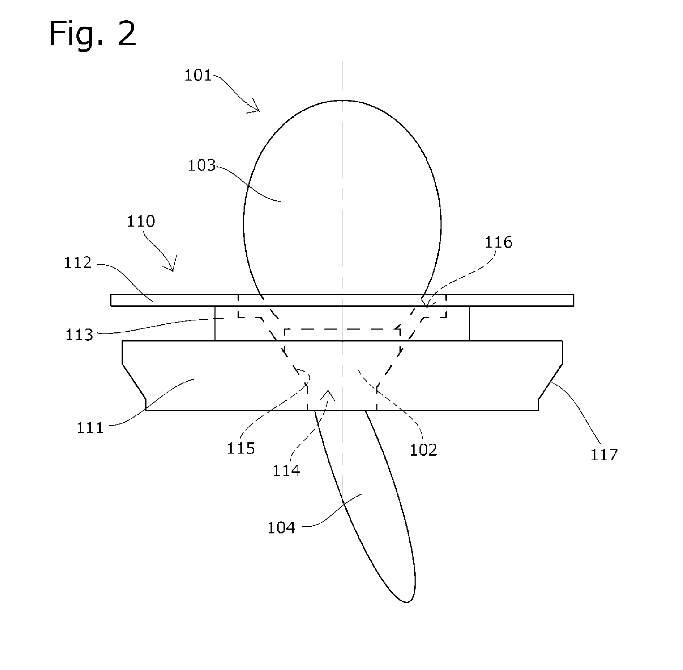

The supporting body 102 which supports the plant 101 has, on the outer surface thereof, a taper section which decreases in diameter towards the bottom, and is configured so as to be fixable securely to the inner surface of the supporting hole 114, as shown in Fig. 2 to Fig. 4.

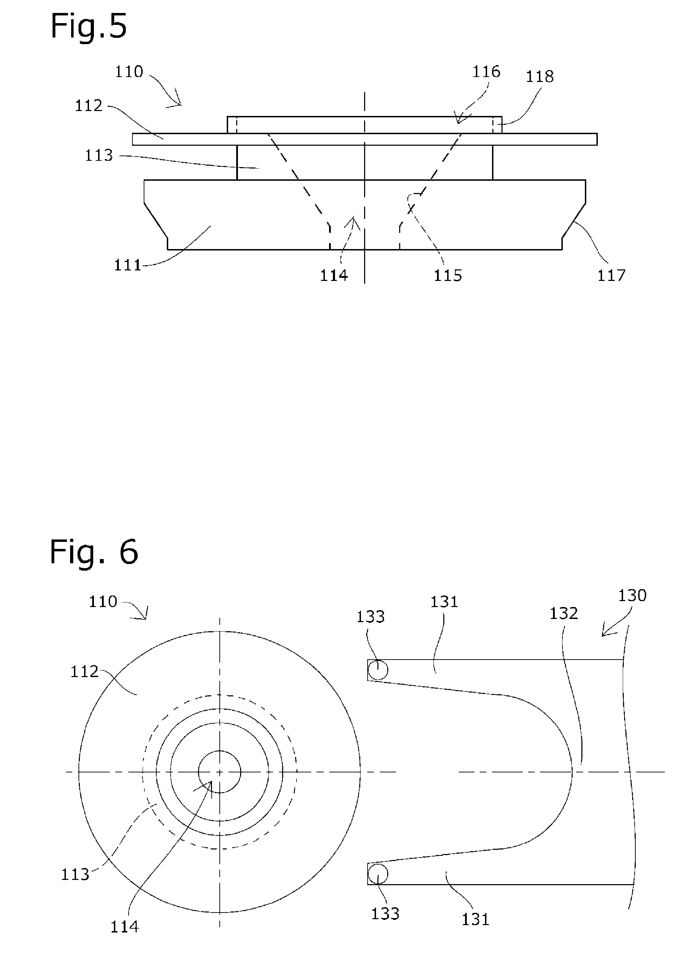

Furthermore, as shown in Fig. 5, the water collecting section 116 of the plant holder 110 may be configured by erecting a wall part 118 to a prescribed height on the upper surface of the flange 112, to the outside of the supporting hole 114, and using the space on the inner circumference side thereof as a water collecting section 116.

Next, a cultivation process for a plant 101 using the plant holder 110 configured as described above will be described.

Firstly, a plant 101 which can be cultivated in cultivation equipment using a cultivation panel is taken and, as shown in Fig. 1, the root 104 thereof is introduced from above into a supporting hole 114 of a plant holder 110, and as shown in Fig. 2, the supporting body 102 is fitted into and united with the supporting hole 114.

In the present embodiment, since a taper section 115 is formed on the inner surface of the supporting hole 114, and a taper section is also provided on the outer surface of the supporting body 102, then the supporting body 102 can be introduced smoothly into the supporting hole 114, as well as being fixed reliably in an accurate position.

Furthermore, during the introduction task, suctioning may be carried out as indicated in Patent Document 2 described above, in such a manner that the root 104 passes smoothly through the supporting hole 114 of the plant holder 110 and assumes a downwardly extended state.

When suctioning is carried out, by supplying water to the water collecting section 116 which is formed in the flange side of the supporting hole 114, the root 104 is suctioned together with the water, and can be made to pass more reliably through the supporting hole 114.

Moreover, since the water collecting section 116 is formed to have a relatively large diameter on the flange side of the supporting hole 114, then even if the root 104 spreads and/or extends obliquely downwards, it is still possible to guide the root 104 reliably into the supporting hole 114.

Furthermore, if the plant 101 is of a variety in which the root 104 spreads further in the lateral direction, then by using a plant holder 110 in which the water collecting section 116 is formed by an inner circumference-side space of a wall part 118 that is erected on the upper surface of the flange 112 to the outside of the supporting hole 114, as illustrated in Fig. 5, it is possible to guide the root 104 reliably into the supporting hole 114.

In this way, the state of the plant 101 supported in the plant holder 110 is maintained until cultivation by the cultivation equipment using the cultivation panel has been completed, and the plant 101 is transplanted to a different cultivation panel together with the plant holder 110 as the plant grows, and is cultivated until reaching a harvestable stage whereupon the plant 101 is separated from the plant holder 110 during harvesting.

Consequently, in the embodiment described above, the fitting part 111, the engaging part 113 and the flange part 112 are formed in an integrated fashion from resin, or the like, but these elements may also be each formed independently, and be fixed in an integrated fashion by introducing and fitting the supporting body 102 which supports the plant 101.

Next, the operation of holding the plant holder 110 supporting the plant 101 on a cultivation panel 120 during cultivation in cultivation equipment will be described.

As shown in Fig. 3, the root 104 of the plant holder 110 on which the plant 101 is supported is introduced from above into the holding hole 121 of the cultivation panel 120, and as shown in Fig. 4, the fitting part 111 of the plant holder 110 is fitted into and held by the holding hole 121.

In the present embodiment, since a taper section 122 is formed on the inner surface of the holding hole 121, and a taper section 117 is also provided on the outer surface of the fitting part 111 of the plant holder 110, then the fitting part 111 of the plant holder 110 can be introduced smoothly into the holding hole 121, as well as being fixed reliably in an accurate position.

By this means, when the introduction operation is automated, there is no requirement for a high degree of positioning accuracy or stability in the operation, and the transplantation device can be simplified.

Next, a transplantation device which causes the plant holder 110 that supports a plant 101 to be held in the cultivation panel 120, or which separates the plant holder 110 from the cultivation panel 120, during a transplantation operation, will be described.

As shown in Fig. 6 to Fig. 8, the transplantation device relating to one embodiment of the present invention has a holding part 130 in which two holding arms 131 extending towards the front are provided, and is configured so as to be movable in a direction perpendicular to the surface of at least the cultivation panel 120, by a drive mechanism (not illustrated) (the plant 101 and the cultivation panel 120 are not illustrated in Fig. 6 to Fig. 8).

The holding part 130 and the cultivation panel 120 need to be moved relatively in a direction parallel to the surface of the cultivation panel 120 (the horizontal direction), but the relative movement may also be achieved by configuring the holding part 130 so as to be movable by a drive mechanism (not illustrated), or by configuring the cultivation panel 120 only so as to be movable.

The interval between the two holding arms 131 is formed so as to be larger than the diameter of the engaging part 113 of the plant holder 110 and to be smaller than the diameter of the flange part 112, and between the two holding arms 131 is provided an abutting part 132 which is formed in a shape that follows the outer surface shape of the engaging part 113 of the plant holder 110.

In the present embodiment, the abutting part 132 is formed in a shape which follows substantially half the circumference of the outer surface of the engaging part 113 of the plant holder 110.

Furthermore, the thickness of the two holding arms 131 is formed to be smaller than the height of the engaging part 113 of the plant holder 110 (the interval between the flange part 112 and the engaging part 111).

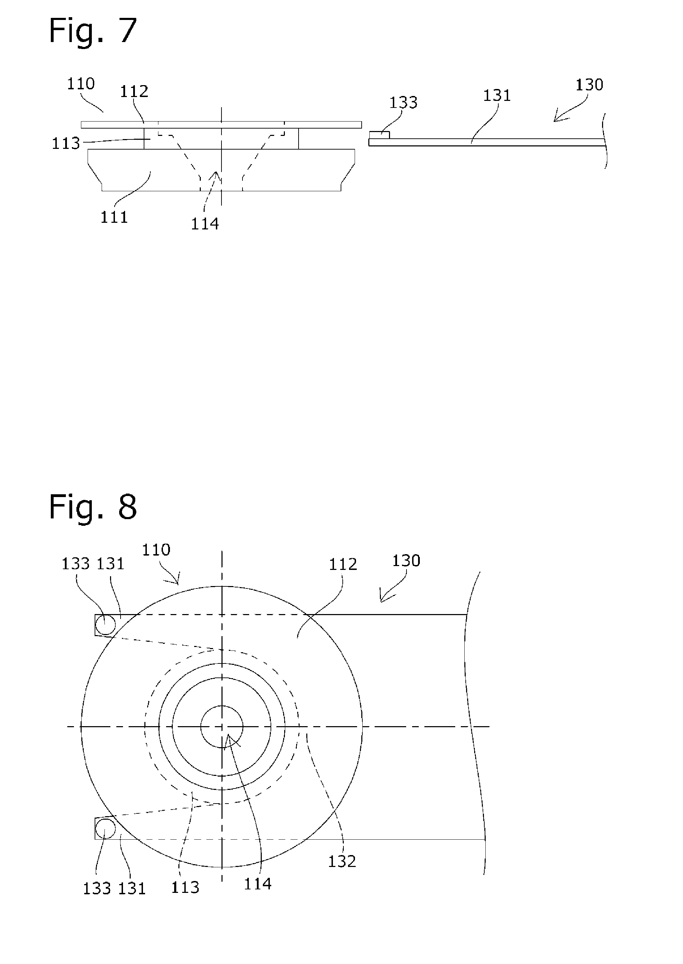

The front ends of the holding arms 131 are formed to a length which reaches to outside the flange part 112, when the two holding arms 131 are introduced on both sides of the engaging part 113 of the plant holder 110 and the abutting part 132 abuts against the engaging part 113 (the state shown in Fig. 8), and projecting parts 133 which project upwards are formed in the portions of the two holding arms 131 which reach to outside the flange part 112.

The height of the projecting parts 133 is formed so as to be smaller than the height of the engaging part 113 of the plant holder 110 (including the thicknesses of the two holding arms 131 described above) (in other words, smaller than the interval between the flange part 112 and the fitting part 111).

Next, the operation of a transplantation device relating to the present embodiment which is configured in this way will be described.

When the plant 101 grows and is transplanted, or is harvested, the plant 101 is removed upwards from the cultivation panel 120 together with the plant holder 110 in a state where the plant 101 is supported by the plant holder 110.

Firstly, the holding part 130 having two holding arms 131 is moved in a horizontal plane to the side of the plant holder 110 which is held on the cultivation panel 120 (the position shown in Fig. 6) (it is also possible to move the cultivation panel 120 or to move both the holding part 130 and the cultivation panel 120), and in addition to this, the two holding arms 131 and the projecting parts 133 are moved in a vertical direction to a height that is situated between the flange part 112 and the fitting part 111 (the position shown in Fig. 7).

From this state, the holding part 130 is moved horizontally in a direction towards the plant holder 110, while maintaining position in the vertical direction, the two holding arms 131 are introduced on both sides of the engaging part 113, and the abutting part 132 is moved to a position that abuts against the engaging part 113 (the position shown in Fig. 8).

By moving the holding part 130 having two holding arms 131 in an upward vertical direction from this state, the two holding arms 131 and the abutting part 132 of the holding part 130 raise up the flange part 111 of the plant holder 110 from below, and separate the plant holder 110 upwards from the cultivation panel 120.

In this case, since the projecting parts 133 which project upwards at the front ends of the two holding arms 131 project upwards towards the outer side beyond the outer periphery of the flange part 112 of the plant holder 110, then the plant holder 110 is restricted from movement in the horizontal direction, and is prevented from falling off from the holding part 130.

When the plant 101 has been separated upwards from the cultivation panel 120 together with the plant holder 110, while being supported by the plant holder 110, as described above, and has been moved to another cultivation panel 120, then by carrying out an operation opposite to that described above, the plant holder 110 can readily be introduced from above into the cultivation panel 120.

In this case, since the taper section 122 is formed on the inner surface of the holding hole 121, and a taper section 117 is also provided on the outer surface of the fitting part 111 of the plant holder 110, then the fitting part 111 of the plant holder 110 can be introduced smoothly into the holding hole 121, and can be fixed reliably in an accurate position, without requiring a high degree of positioning accuracy and operational stability of the holding part 130, and therefore it is possible to simplify transplantation device as a whole, including the drive mechanism (not illustrated).

Furthermore, since the fitting part 111 of the plant holder 110 in the present embodiment is formed to have a large diameter in substantially the same size as the of the flange part 112, and also the holding hole 121 of the cultivation panel 120 is formed to have a large diameter accordingly, then during transplantation, simply by lowering the plant holder 110 from above the holding hole 121 of the cultivation panel 120, it is possible to cause the root 104 of the plant 101 to pass though smoothly to below the holding hole 121, without being damaged, even if the root 104 spreads outwards significantly.

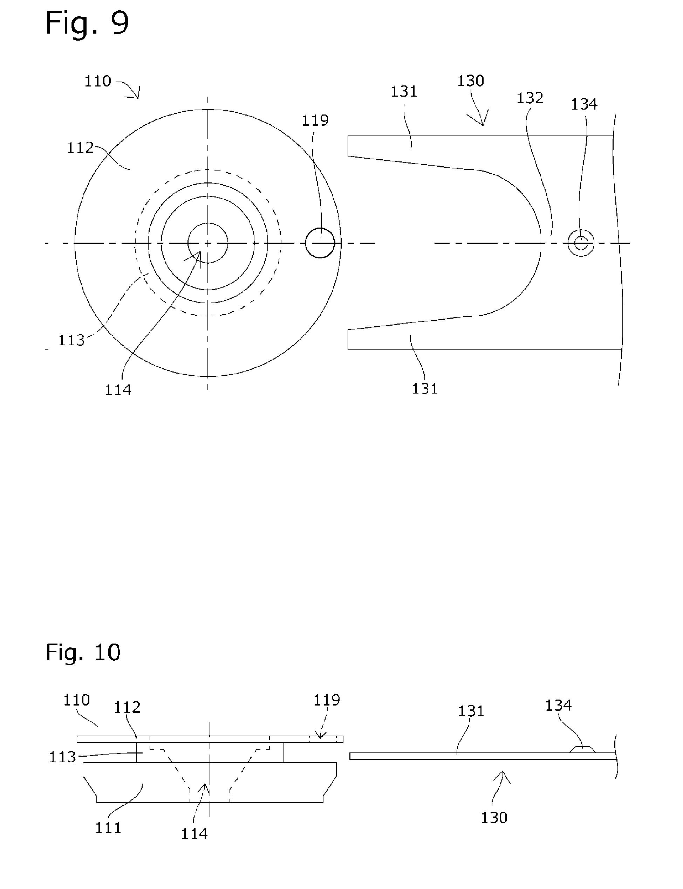

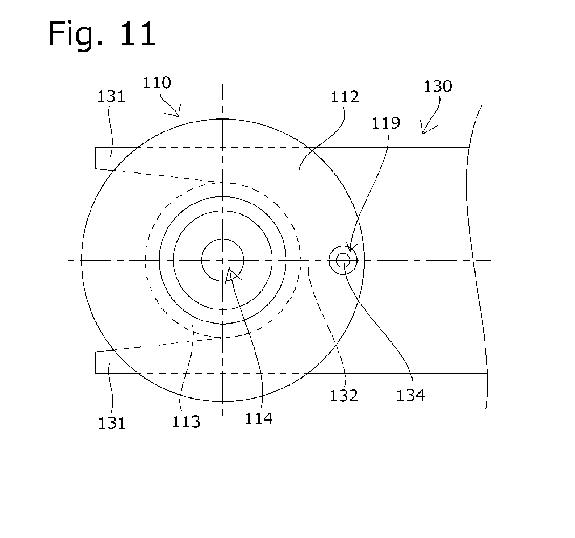

Fig. 9 to Fig. 11 show a transplantation device relating to a further embodiment.

In the present embodiment, instead of the projecting parts 133 which project upwards and are provided in the portions of the two holding arms 131 which reach to outside the flange part 112 in the transplantation device relating to the embodiment described above, a configuration is adopted in which an engaging protrusion 134 is formed above the abutting part 132, so as to engage with an engaging recess 119 which is formed in the flange part 112 of the plant holder 110 (in the present embodiment, the recess part has the shape of a through hole).

The operation of the transplantation device relating to the present embodiment is similar to the embodiment described above, and the effects obtained by having an engaging protrusion 134 are similar to the effects obtained by having the projecting parts 133 of the embodiment described above.

The shape of the engaging protrusion 134 of the abutting part 132 and the engaging recess 119 of the flange part 112 may be any shape which restricts movement in the horizontal direction by engagement when the flange part 112 is raised up by the two holding arms 131, and it is also possible to form an engaging recess in the abutting part 132 and the form an engaging protrusion in the flange part 112, conversely to the present embodiment.

Fig. 1 to Fig. 11 which were used to describe the respective embodiments and operations above show simplified views of only the portions which are necessary to aid understanding, and do not depict actual dimensions, or shapes, etc., and do not exclude other accessories, and the like.

The specific detailed embodiments can be set, added to, and modified, as appropriate, within a range that does not depart from the technical features of the present invention.

According to the respective embodiments of a plant holder, a cultivation panel and a transplantation device according to the present invention, in a simple configuration the root of a plant can be made to pass through to below a holding hole, without damaging the root, leaves are prevented from hanging down and becoming damaged, and the workability in the case of automation can be improved.

The embodiments described above were described with reference to cases where the state of the plant 101 being supported by the plant holder 110 is maintained until cultivation by the cultivation equipment using cultivation panels is completed, but it is also possible to transplant the plant 101 to a different plant holder 110 during the course of cultivation.

Furthermore, in the respective embodiments described above, the plant 101 is supported by being fitted into a supporting hole 114 of the plant holder 110 in a state of being supported by the supporting body 102, but the plant 101 may also be supported directly on the plant holder.

## Claims

1. A plant holder, at least a portion of an outer peripheral part of which fits into a holding hole of a cultivation panel, and which has a supporting hole directly or indirectly supporting a plant, wherein
the plant holder is formed of a fitting part, an outer peripheral part of which fits into the holding hole in the cultivation panel, a flange part which is provided in an uppermost part, and an engaging part which is provided between the flange part and the fitting part; and
the outer diameter of the engaging part is formed to be smaller than the outer diameters of the fitting part and the flange part.

2. The plant holder according to claim 1, wherein an outer circumferential surface of the fitting part is formed in a shape by which the outer circumferential surface of the fitting part can be introduced into the holding hole of the cultivation panel from above and be held without passing below the holding hole.

3. The plant holder according to claim 2, wherein at least the portion of the outer circumferential surface of the fitting part is formed in a tapered shape which decreases in diameter towards a bottom thereof.

4. The plant holder according to any one of claims 1 to 3, wherein an inner surface of the supporting hole is formed in a shape by which a plant supported on a supporting body can be introduced therein from above and the supporting body is held without passing below the holding hole.

5. The plant holder according to claim 4, wherein at least the portion of the inner surface of the supporting hole is formed in a tapered shape which decreases in diameter towards a bottom thereof.

6. The plant holder according to claim 4 or claim 5, wherein portions having the fitting part, the engaging part and the flange part are each formed independently, and are formed so as to be fixed in an integrated manner by introducing and fitting the supporting body supporting the plant.

7. The plant holder according to any one of claims 1 to 6, wherein a water collecting section is formed outside the supporting hole on the flange side.

8. The plant holder according to claim 7, wherein the water collecting section is formed in a space on an inner circumference side of a wall part erected outside the supporting hole on the upper surface of the flange.

9. A cultivation panel in which a plurality of holding holes passing vertically are provided, the holding holes being formed such that the plant holder according to any one of claims 1 to 8 can be fitted therein.

10. A transplantation device having a holding part holding the plant holder according to any one of claims 1 to 8, wherein
two holding arms extending forward are provided in the holding part; and
the interval between the two holding arms is formed to be larger than the diameter of the engaging part and smaller than the diameter of the flange part.

11. The transplantation device according to claim 10, wherein an abutting part formed in a shape following the outer surface shape of the engaging part of the plant holder is provided between the two holding arms of the holding part.

12. The transplantation device according to claim 11,
wherein the two holding arms are formed to have a length so that front ends thereof reach outside the flange part, when introduced on both sides of the engaging part of the plant holder; and
a projecting part projecting upwards is formed in a portion of each of the two holding arms, which reaches outside the flange part.

13. The transplantation device according to claim 11, wherein an engaging protrusion or an engaging recess is formed in an upper portion of the abutting part, at a position to engage with the engaging recess or the engaging protrusion formed in the flange part of the plant holder, when the two holding arms are introduced on both sides of the engaging part of the plant holder.
